# EUROPEAN PATENT SPECIFICATION

(11) **EP 0 864 757 B1**
(45) Date of publication and mention of the grant of the patent: **28.05.2003**
(21) Application number: 98103705.4
(22) Date of filing: 03.03.1998
(51) Int. Cl.: F04D 29/20, F16B 23/00

(54) **Screw connection**
Schraubverbindung
Assemblage à vis

(30) Priority: 13.03.1997 DE 29704545 U
(43) Date of publication of application: 16.09.1998
(73) Proprietor: WHIRLPOOL CORPORATION, Benton Harbor Michigan 49022 (US)
(72) Inventor: Buser, Josef, 21025 Comerio (IT); Rauber, Ludwin, 21025 Comerio (IT); Ferber, Ulrich, 21025 Comerio (IT)
(74) Representative: Guerci, Alessandro

(56) References cited:
- FR-A- 1 309 208
- US-A- 4 361 412

## Description

The invention relates to a screw head for a screw connection with an internal and an external thread, adapted for a hexagonal wrench socket.

Generally this known screw connection is provided with a solid hexagon as a screw head. The hexagonal wrench socket is plugged with its hexagon socket on to the hexagon, so that a positive-locking connection is established, which is suitable for transmitting a large degree of torque in both. directions of rotation. In many cases the screw portion is not formed as a pure attachment screw and is manufactured as a complicated metal or injection-moulded plastic part. In this respect the accumulation of material in the solid screw head is a hindrance to the rapid and cost-effective manufacture of the screw portion.

FR-A-1 309 208 discloses a metal screw head having six webs obtained by means of longitudinal slots on the six sides of the hexagonal head.

It is the object of the invention to provide a screw connection of the type already mentioned, in which a disadvantageous massive accumulation of material in the screw head is avoided, and the transmittable torque can be influenced in a simple way by the design of the screw head.

This object is achieved according to the invention in that the screw head has three webs radiating at an angle of 120° from the centre of the screw head, whose free ends taper to points, and in that these points lie on an orbit and have a spacing apart from one another corresponding to the key width of the hexagon wrench socket.

By means of the web, a screw head is provided which avoids an accumulation of material and can be adapted to the thickness of the other areas of the screw portion. In addition, the screw head formed from webs may be dimensioned for a predeterminable torque only.

If in this respect the points lie on the central axes of the webs and are formed by flanks standing symmetrically thereto, and enclosing an angle of 135°, then by means of the flank dimensions it can be determined at which torque the hexagonal wrench socket can be turned past over the webs. In addition, the flanks can extend laterally beyond the webs into the connecting side surfaces of the hexagonal wrench socket.

Transmission of a predetermined torque can be selected by the material chosen and the dimensions of the webs and flanks.

In order to achieve a clear effective connection between the webs and the hexagonal wrench socket, according to one design the height of the webs in the screw-in direction is adapted to the depth of the hexagonal socket in the hexagonal wrench socket.

In one design in particular, the invention may be used with advantage as it is characterised in that the screw head is integrally formed on a hub of a pump vane wheel, which may be screwed to the motor shaft of an electric motor.

In this respect the hub of the pump vane wheel may be screwed with an internal thread on the motor shaft provided with an external thread and mounted in a bearing plate of the electric motor, and the pump vane wheel is disposed in a pump chamber which is formed by a pump casing and the bearing plate of the electric motor, and is supported via a compression spring, a rubber layer and a carbon ring in a rotatable manner on a ceramic ring mounted in the bearing plate. In this way, the predetermined front slot between the pump vane wheel and the pump casing can be adjusted in a known way.

When the pump vane wheel is screwed on to the motor shaft, the compression spring is compressed, so that the applied pressure between the carbon ring and the ceramic ring increases. As soon as the torque predetermined by the screw head is achieved, the hexagonal wrench socket comes out of effective connection with the screw head and further increase in the applied force is prevented. Thus the torque transmittable form the electric motor to the pump vane wheel is limited, and thus an overload safety device is provided.

The invention is described in more detail with reference to a screw connection between a pump vane wheel as a screw portion and the motor shaft of an electric motor in order to achieve an overload safety device. Shown are:
- Figure 1:: a cross-section through a pump with a pump vane wheel and motor shaft, and
- Figure 2:: a partial front view of the pump vane wheel with the screw head according to the invention.

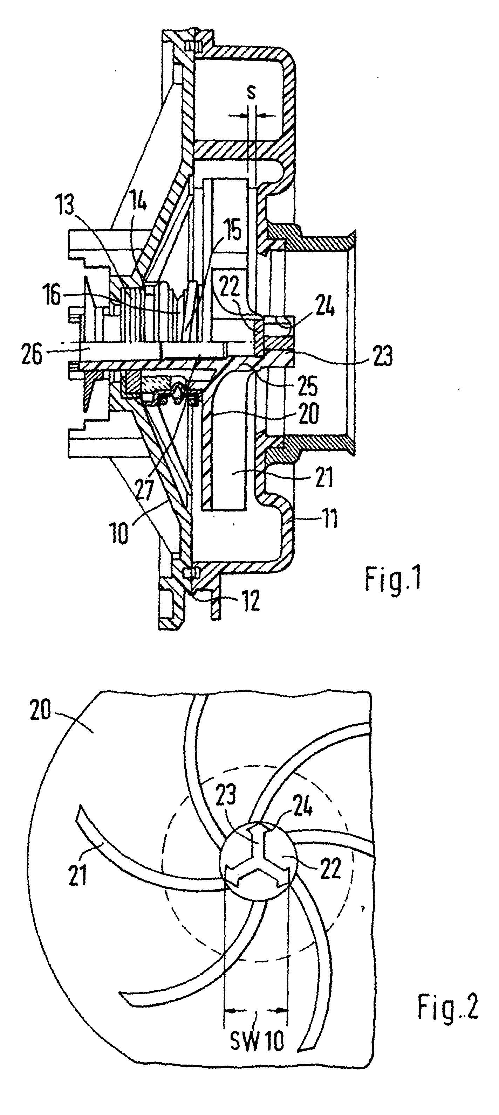

As Figure 1 shows, a motor shaft 26 of an electric motor is mounted in a bearing plate 10, which along with a pump casing 11, forms a pump chamber. Disposed in this pump chamber is a pump vane wheel 20 with vanes or wings 21, and screwed on to the end of the motor shaft 26 projecting into the pump chamber, as the screw connection 27 shows. This screw connection comprises an inner thread on the hub 25 of the pump vane wheel 20 and an outer thread on the motor shaft. Mounted in the pump lid 10 is a ceramic ring 13, upon which is supported a carbon ring 14, which is held by a compression spring 15 on the ceramic ring 13. The rubber bellows 16 covers the transition in a sealed manner. As the reference number 12 shows, the pump lid 10 is rigidly connected to the pump casing 11, e.g. by thermoplastic deformation or friction welding.

The screw head 22 has a base plate, which closes the hub 25. As Figure 2 shows, there are moulded on to this base plate three webs 23, which radiate from the centre of the base plate and are at an angle of 120° to one another. The webs 23 taper to points which lie on an orbit and are at a distance apart corresponding to the predetermined wrench width, e.g. SW10, of the hexagonal wrench socket. The points are formed by flanks 24, which are disposed symmetrically to the central axes of the webs 23 and respectively enclose an angle of 135°. In this way a situation is achieved in which the flanks 24 abut on the adjacent side surfaces of the socket of the hexagonal wrench socket.

In conjunction with the material selected for the pump vane wheel 20, it can be predetermined with the dimensions of the webs 23 and the flanks 24 at what torque the hexagon wrench socket will be turned through over the webs 23. This means that only a known torque can be transmitted via the screw head 22 thus designed, as the webs 23 yield to an increased torque. In the example described, this means that the pump vane wheel 20 can only be screwed on to the motor shaft 26 until at a counter-pressure generated via the compression spring 15, further increase on the torque in the screw head 22 is avoided by "turning through" of the hexagon wrench socket. Thus the desired frontal slot s between the pump vane wheel 20 and the pump casing 11 is also thus adjusted. The carbon ring 14 is supported correspondingly strongly on the ceramic ring 13, so that the torque transmittable from the electric motor to the pump vane wheel 20 is limited. This coupling between the ceramic ring 13 and the carbon ring 14 forms an overload safety device.

By means of the new screw head 22, not only is a solid accumulation of material at the pump vane wheel 20 avoided, at the same time also the transmittable torque for the screw connection 27 is predetermined.

## Claims

1. Screw head (22) for a screw connection (27) with an internal and an external thread, adapted for a hexagonal wrench socket,
**characterised in that**
the screw head (22) has only three webs radiating at an angle of 120° from the centre of the screw head (22), whose free ends taper to points, and
**in that** these points lie on an orbit and have a spacing apart from one another corresponding to the key width of the hexagon wrench socket.

2. Screw head according to claim 1,
**characterised in that**
the points lie on the central axes of the webs (23), and are formed by flanks (24) standing symmetrically thereto, and which enclose an angle of 135°.

3. Screw head according to claim 2,
**characterised in that**
the flanks (24) extend laterally over the webs (23) into the adjacent side surfaces of the hexagon wrench socket.

4. Screw head according to one of claims 1 to 3,
**characterised in that**
the selection of material and the dimensions of the webs (23) and flanks (24) are co-ordinated to the transmission of a predetermined torque.

5. Screw head according to one of claims 1 to 4,
**characterised in that**
the height of the webs (23) in the screw-in direction is adapted to the depth of the hexagon socket in the hexagon wrench socket.

6. Screw head according to one of claims 1 to 5,
**characterised in that**
the screw head (22) is integrally formed on a hub (25) of a pump vane wheel (20) which may be screwed to the motor shaft (26) of an electric motor.

7. Screw head according to claim 6,
**characterised in that**
the hub (25) of the pump vane wheel (20) may be screwed (27) with an internal thread on to the motor shaft (26) provided with an external thread and mounted on a bearing plate (12) of the electric motor.

8. Screw head according to claim 6 or 7,
**characterised in that**
the pump vane wheel (20) is disposed in a pump chamber, which is formed by a pump casing (11) and the pump lid (10) and is supported via a compression spring (15), a rubber layer (16) and a carbon ring (14) in a rotatable manner on a ceramic ring (13) mounted in the pump lid (10).

## Patentansprüche

1. Schraubenkopf (22) für eine Schraubverbindung mit einem Innen- und Außengewinde versehenen Schraubteil, das für einen Sechskant-Steckschlüssel ausgebildet ist,
**dadurch gekennzeichnet,**
**dass** der Schraubenkopf (22) nur drei im Winkel von 120° von der Mitte des Schraubenkopfes (22) strahlenförmig ausgehende Stege (23) aufweist, deren freie Enden als Spitzen auslaufen, und
**dass** diese Spitzen auf einer Kreisbahn liegen und einen Abstand untereinander aufweisen, der der Schlüsselweite des Sechskant-Steckschlüssels entspricht.

2. Schraubenkopf nach Anspruch 1,
**dadurch gekennzeichnet,**
**dass** die Spitzen auf den Mittelachsen der Stege (23) liegen und durch symmetrisch zu diesen stehenden Flanken (24) gebildet sind, welche einen Winkel von 135° einschließen.

3. Schraubenkopf nach Anspruch 2,
**dadurch gekennzeichnet,**
**dass** sich die Flanken (24) über die Stege (23) seitlich hinaus in die anschließenden Seitenflächen des Sechskant-Steckschlüssels erstrecken.

4. Schraubenkopf nach einem der Ansprüche 1 bis 3,
**dadurch gekennzeichnet,**
**dass** die Materialwahl und die Abmessungen der Stege (23) und Flanken (24) auf die Übertragung eines vorgegebenen Drehmomentes abgestimmt sind.

5. Schraubenkopf nach einem der Ansprüche 1 bis 4,
**dadurch gekennzeichnet,**
**dass** die Höhe der Stege (23) in der Einschraubrichtung an die Tiefe der Sechskantaufnahme im Sechskant-Steckschlüssel angepasst ist.

6. Schraubenkopf nach einem der Ansprüche 1 bis 5,
**dadurch gekennzeichnet,**
**dass** der Schraubenkopf (22) einstückig an einer Nabe (25) eines Pumpenflügelrades (20) einstückig angeformt ist, das mit der Motorwelle (26) eines Elektromotors verschraubbar ist.

7. Schraubenkopf nach Anspruch 6,
**dadurch gekennzeichnet,**
**dass** die Nabe (25) des Pumpenflügelrades (20) mit Innengewinde auf die mit Außengewinde versehene und in einem Lagerschild (12) des Elektromotors gelagerte Motorwelle (26) aufschraubbar (27) ist.

8. Schraubenkopf nach Anspruch 6 oder 7,
**dadurch gekennzeichnet,**
**dass** das Pumpenflügelrad (20) in einer Pumpenkammer angeordnet ist,
die von einem Pumpengehäuse ( 1 1 ) und dem Pumpendeckel ( 10) gebildet ist und sich über eine Druckfeder (15), einen Gummibelag (16) und einen Kohlering (14) drehbar an einem im Pumpendeckel (10) gelagerten Keramikring (13) abstützt.

## Revendications

1. Tête de vis (22) pour une liaison à vis (27) avec un filet interne et un filet externe, prévue pour une douille de clé à six pans, **caractérisée en ce que** la tête de vis (22) a trois nervures seulement rayonnant avec un angle de 120° depuis le centre de la tête de vis (22), dont les extrémités libres se rétrécissent jusqu'à des pointes, et **en ce que** ces pointes se trouvent sur une orbite et ont un espacement l'une par rapport à l'autre correspondant à la largeur de clé de la douille de clé à six pans.

2. Tête de vis selon la revendication 1, **caractérisée en ce que** les pointes se trouvent sur les axes centraux des nervures (23), et sont formées par des flancs (24) s'étendant de manière symétrique dessus, et qui enferment un angle de 135°.

3. Tête de vis selon la revendication 2, **caractérisée en ce que** les flancs (24) s'étendent latéralement au-delà des nervures (23) dans les surfaces latérales adjacentes de la douille de clef à six pans.

4. Tête de vis selon l'une des revendications 1 à 3, **caractérisée en ce que** la sélection de matière et les dimensions des nervures (23) et des flancs (24) sont coordonnées à la transmission d'un couple prédéterminé.

5. Tête de vis selon l'une des revendications 1 à 4, **caractérisée en ce que** la hauteur des nervures (23) dans la direction de vissage est adaptée à la profondeur de la douille hexagonale dans la douille de clef à six pans.

6. Tête de vis selon l'une des revendications 1 à 5, **caractérisée en ce que** la tête de vis (22) est formée intégralement sur un moyeu (25) d'une roue à aube de pompe (20) qui peut être vissée sur l'arbre de moteur (26) d'un moteur électrique.

7. Tête de vis selon la revendication 6, **caractérisée en ce que** le moyeu (25) de la roue à aube de pompe (20) peut être vissé (27) avec un filet interne sur l'arbre de moteur (26) pourvu d'un filet externe et monté sur une plaque de roulement (12) du moteur électrique.

8. Tête de vis selon la revendication 6 ou 7, **caractérisée en ce que** la roue à aube de pompe (20) est disposée dans une chambre de pompe, qui est formée par un carter de pompe (11) et le couvercle de pompe (10) et est supportée par l'intermédiaire d'un ressort de compression (15), d'une couche de caoutchouc (16) et d'une bague en carbone (14) d'une façon rotative sur une bague en céramique (13) montée dans le couvercle de pompe (10).
